# EUROPEAN PATENT SPECIFICATION

(11) **EP 0 729 909 B1**
(45) Date of publication and mention of the grant of the patent: **13.12.2000**
(21) Application number: 96301429.5
(22) Date of filing: 29.02.1996
(51) Int. Cl.: B65G 65/23

(54) **Method and apparatus for unloading boxes**
Verfahren und Vorrichtung zum Entladen von Kisten
Méthode et dispositif pour décharger des caisses

(30) Priority: 03.03.1995 GB 9504600
(43) Date of publication of application: 04.09.1996
(73) Proprietor: Herbert, Roderic Joseph, Walton Highway, Wisbech PE14 7DJ (GB)
(72) Inventor: Hunter, Matthew, Wisbech, Cambs, PE14 7JN (GB)
(74) Representative: Archer, Philip Bruce

(56) References cited:
- DE-A- 3 943 409
- US-A- 1 487 076
- US-A- 3 279 635
- US-A- 5 302 073

## Description

This invention relates to a method and apparatus for unloading boxes or the like. The invention is particularly, but not exclusively, applicable to the unloading of vegetables, root crops, fruit and the like.

Previous proposals in relation to apparatus for unloading boxes and like containers include box lifting and tipping mechanisms on which a full box can be placed, for example by means of a fork lift truck, the box then being raised and clamped and tipped, and finally returned empty to its former position for removal, followed by subsequent loading of another box.

Recent changes in the design of boxes have been made to provide greater stability to the boxes when stacked. This has resulted in cross braces being fitted to boxes which restrict the discharge of produce from tipped boxes. The consequential inability to fully discharge the contents of a box adds extra cost to the operation by requiring that boxes are manually cleared.

In our European patent number EP 0 395 288 there is disclosed apparatus for unloading boxes and the like produce containers. The apparatus raises boxes from a lowered position to an elevated discharge position where the boxes are tipped to empty the contents therefrom.

It has been proposed in US-A-3 279 635 an unloading mechanism according to the first part of claim 1 to provide apparatus for emptying the contents of a container or box in which the container or box is raised from a lowered position to an elevated and loading position. This document, discloses apparatus in which during lifting a box travels on a track which has an arcuate upper portion causing a degree of tilt to be imparted to the support means. To facilitate emptying of said box, means such as a ram push the box around the arcuate upper portion towards a pivot assembly. The box is then completely inverted.

US-A-1 487 076 discloses apparatus for emptying cans which utilises generally curved channel shaped guides along which a can will travel immediately prior to being tipped.

DE 39 43 409 A1 discloses apparatus for lifting and emptying containers with an angled portion of the track along which the containers will travel immediately prior to being tipped.

We have identified a requirement for the provision of some means to improve the efficiency of operation of apparatus for unloading boxes and the like and an object of the present invention is to provide such improvements.

According to the invention there is provided a method and apparatus for unloading boxes or the like as defined in the accompanying claims. According to the invention, apparatus for unloading boxes or the like comprises a moveable support means to receive a box or the like produce container, said moveable support having roller members, a pair of spaced upright parallel tracks to receive the roller members of said moveable support, a mechanism to lift and lower said support means within parallel tracks, a tipping or tilt mechanism whereby said support and the box mounted thereon can be tipped or tilted to facilitate unloading wherein said parallel tracks are formed with an angled lower portion such that the profile of said tracks along which the support platform travels as it is lifted causes a degree of tilt to be imparted to said support means and the box supported thereon as the box is elevated to the required tipping position, wherein said support means and a box mounted thereon are maintained in the caused degree of tilt as the box is lifted towards the tipping or tilt mechanism.

In use, a box is loaded onto a support platform which is at a suitable position to provide sufficient clearance for the box below a lid. The support platform is then raised, thus raising the box loaded thereon. As the support platform is raised, it moves in a track which mechanically increases the maximum angle of tip of the box prior to discharge so that the box can be fully emptied. The profile of the track means along which the support platform travels as it is lifted and lowered causes the support platform and the box supported thereon to be tilted. The support platform and box are caused to continue to travel at this tilted attitude preferably towards the fixed lid and engagement therewith. The lid is retained at an angle which matches the tilt imparted to the box, thus ensuring a good seal. The lid is formed with a discharge chute. The lid clamps the box in position and ensures that the contents of the box do not spill during the tipping cycle but rather are discharged in a more controlled manner through the discharge chute when the box is tilted by the tipping mechanism.

The final tip angle achieved when the box is emptied comprises the sum of the tilt angle imparted as the box is raised and the angle the main tipping mechanism passes through. This provides the advantage that a greater tipping angle can be achieved without the requirement for the main tipping mechanism to rotate through a greater angle and thus no additional loadings are placed on the system structure and a greater tip angle is achieved without substantially changing the tipping mechanism.

Thus according to the invention there is provided a method and apparatus for unloading boxes or the like wherein there is provided a main tilt mechanism and a supplementary tilt mechanism as defined in claim 1. The supplementary tilt mechanism provides additional tilt for a box to be unloaded. According to the invention the supplementary tilt mechanism as defined in claim 1 is located at a location spaced from the main tilt mechanism. As a result, in the embodiment, the advantages provided that the feature of additional tilt can be provided without redesigning the main tilt mechanism. The box to be tilted arrives at the main tilting mechanism in an already partially tilted attitude, and can then have added to that partial tilt an additional amount of tilt corresponding to the tilt usually provided by the main tilt mechanism.

According to the invention there is also provided a method of unloading boxes or the like. The method comprises the step of providing an unloading mechanism as herein-before defined and causing said mechanism to impart a tilt to the box to be unloaded, the step of maintaining the box in a tilted attitude as it is being lifted prior to the step of completing the rotation thereof by separate means so as to effect emptying of the box.

A further advantage of the unloading embodiment of the invention known for prior art mechanisms is that by imparting a tilt to the box support and thus the box supported thereon, this increases the overall tipping angle and enables the box to be more fully emptied.

A still further known advantage provided by the embodiments of the invention is that the provision of the initial tilting of the support is effected by the same drive means which effects the vertical lifting of the platform.

A still further known advantage is that consistent emptying of boxes, even those with internal cross braces, is achieved by increasing the maximum tip angle.

Embodiments of the invention will now be described by way of example with reference to the accompanying drawings in which:-

Fig 1 shows a side elevation of an unloading apparatus with a box in position on a support platform ready for unloading.

Fig 2 shows the support platform and the box supported thereon in a tilted attitude being lifted and advancing towards a tilted lid.

Fig 3 shows the tilted box in engagement with the tilted lid.

Fig 4 shows the tilted box and lid being tipped.

Fig 5 shows the box in a fully tipped attitude.

Fig 6 shows, diagrammatically in side elevation, the position of the support platform and the location of pairs of rollers associated therewith when the apparatus is at rest.

Fig 7 shows, diagrammatically in side elevation, the tilted attitude of the support platform and the location of the rollers when the apparatus is in use.

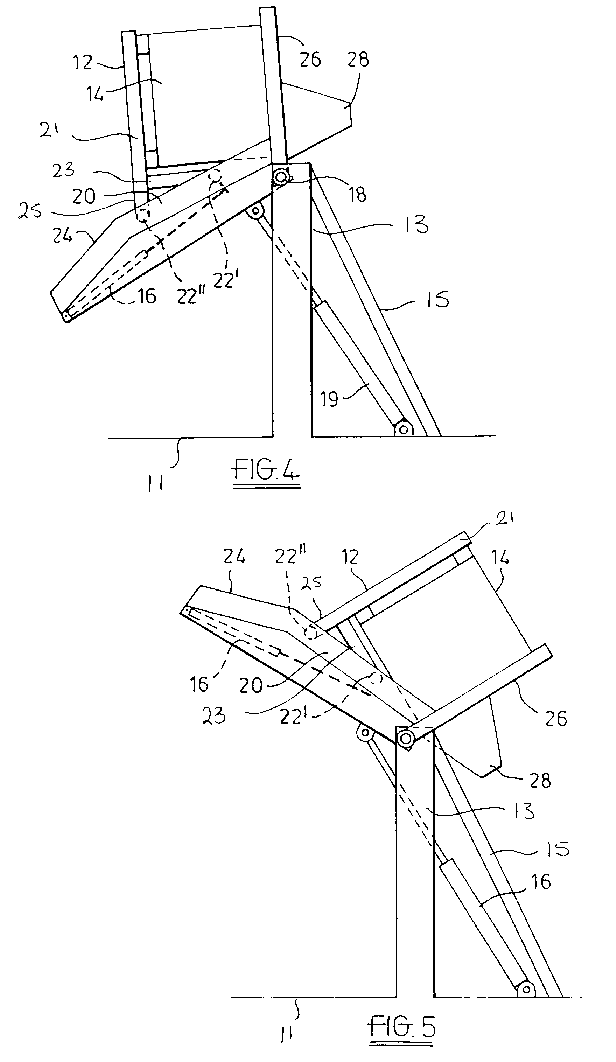

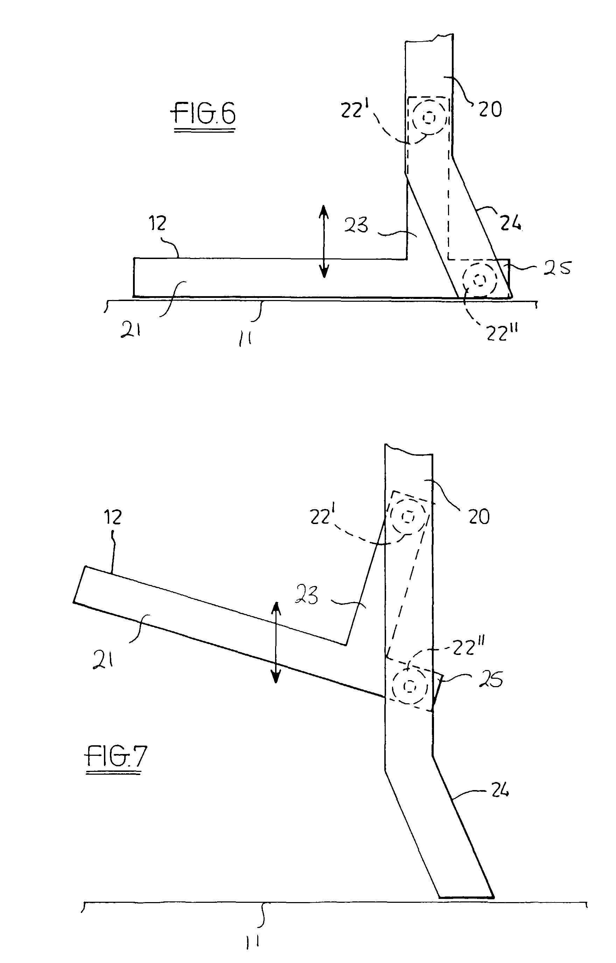

As shown in the drawings, an unloading mechanism 10 for boxes or the like comprises a base 11 together with frame members 13 and 15. Said unloading mechanism has a support platform 12 to receive a box 14 or the like. Said platform 12 comprising a base portion 21 and an upright portion 23. The base portion 23 extends past the upright portion 21 to give, a further extending portion 25. A lift and lower mechanism 16 is provided for support platform 12, together with a tipping mechanism 18 therefor, whereby a raised box 14 supported on support platform 12 can be tipped as shown in Figs 4 and 5 and caused to discharge the contents thereof. Tipping mechanism 18 comprises pivot assembly activated by a ram 19.

Lift and lower mechanism 16 and tipping mechanism 18 are both hydraulically operated. Alternative mechanisms could of course be provided, such as, for example, electrical mechanisms. Control of the lift and lower, and tipping operations is provided by control apparatus (not shown) incorporating hydraulic/electrical control systems.

To facilitate lifting and lowering movement of the support platform 12 is provided with roller members 22' and 22". One pair of roller members 22' are located on the upright portion 23 of the support 12 and the second pair of rollers 22" are located on the extending portion 25 of the base 23. A pair of spaced upright guiding track members 20 are provided. Said track members 20 are pivotally mounted to the frame member 13 by pivot assembly 18 but is not secured to base member 11. The track members 20 are mounted so as to be substantially parallel in said spaced relationship with one another, are channel-shaped in cross section and open towards one another so as to form guide tracks for roller members 22' and 22" therein which are also secured to the support platform 12.

The roller members 22' and 22" secured to the support platform 12 are located within the channels formed in the track members 20. The roller members 22' and 22" are rotatably carried by the support platform 12 thus facilitating movement of the support platform 12 up and down, such movement being guided by the track members 20.

Each track member 20 has an angled lower portion 24 which is also channel shaped in cross section and is an angled continuation of the track members 20.

When the support platform 12 is in its lowest position, a first pair of roller members 22' secured to the support platform are located within the upright track members 20 and a second pair of roller members 22'' are located in angled portion 24 and rearwardly of the first pair as shown in Fig 6.

In use, a box 14 is loaded onto the support platform 12 and the platform 12 is raised by means of lift and lower mechanism 16. As the support platform 12 is caused to rise, the roller members 22' 22'' rotate and ride within the track members 20 and the support platform 12 rises, starting from a substantially horizontal attitude (see Fgs 1 and 6).

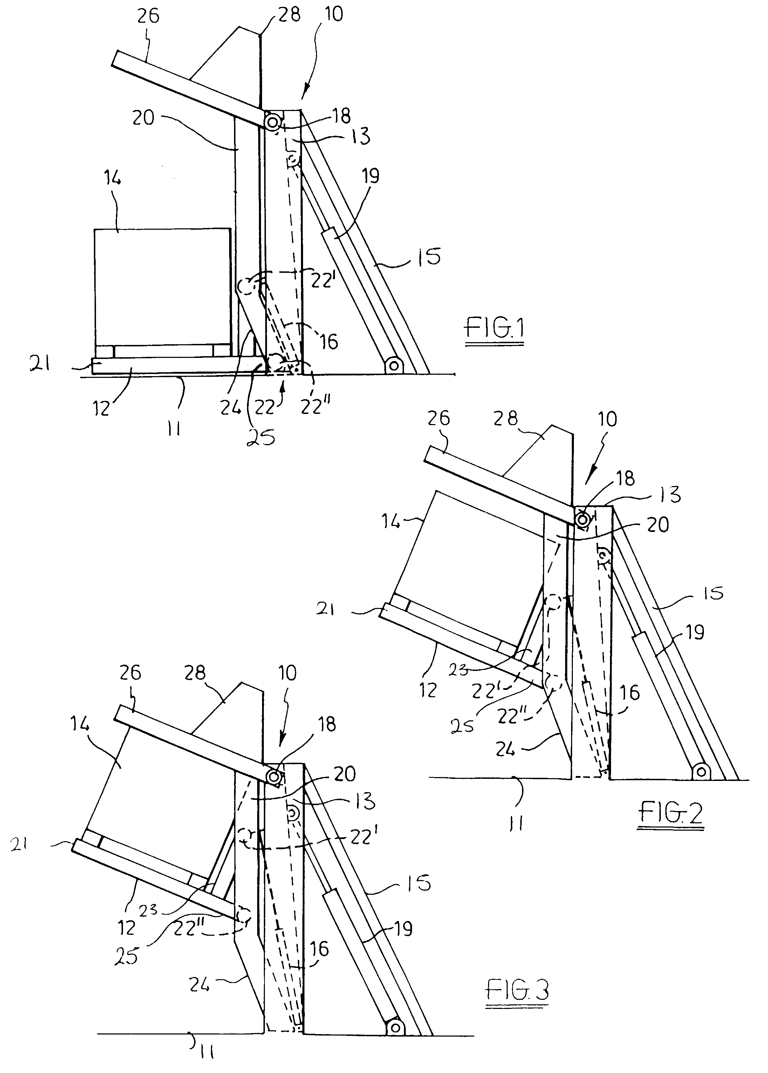

As the support platform 12 is lifted, the second and lower pair of roller members 22'' rotate and ride within the angled lower portion 24 of the track members 20. As the second pair of roller members 22'' travel along the angled lower portion 24 of the track member towards the upright portion of the track members 20, the attitude of platform 12 is caused progressively to change from that of Fig 6 to that of Fig 7 to accommodate the geometry of the track members and to enable the support platform 12 to continue to ascend. The support platform 12 is thus caused to tilt at an angle of between 5° and 25° away from the vertical (according to the geometry of the system) and preferably at an angle of between 5° and 15° from the vertical. This tilting of the support platform 12 causes a box 14 being carried on the platform to be tilted also as shown in Fig 2.

The support platform 12 and the box 14 are maintained by the upright members 20 at this tilted attitude as the platform is raised towards sealing engagement with a lid 26. The lid 26 is secured or fixed to the frame member 13 by means of the pivot assembly 18 and is maintained at a corresponding angle so as to effect a sealing or at least closing engagement with the tilted box 14 as shown in Fig 3 when the box 14 is raised into contact with the lid 26.

Once the sealing engagement between the lid 26 and the box 14 has been effected, the tipping mechanism 18 operates and pivots the support platform 12 , the fixed lid 26 and the box 14 retained there between together with the tracks 20. The contents of the box 14 are discharged through a discharge chute 28 formed in lid 26, thus emptying the box as shown in Figs 4 and 5.

The final tip angle of the support platform 12 and the box 14 mounted thereon comprises the sum of the tilt angles as the box 14 is raised, namely between 5° and 25° plus the angle the main tipping mechanism 18 passes through, usually in the region of 135°.

By providing the two tilt mechanisms in spaced apart yet co-operative and additive relationship, the effect of each is added to that of the other and neither interferes with the operation of the other. Accordingly, the additional amount of tilt can be achieved in a simple manner without the need to redesign the whole apparatus.

It will be understood by reference to Figs 6 and 7 that in the above embodiment the supplemental tilting movement is produced by the angled portion 24 of the guides 20, together with the associated structural geometry of the related portion of support 12 (generally an L-shaped structure as seen in Figs 6 and 7) whereby rollers 22' and 22" and in the shown positional relationship. If roller 22" were located directly below roller 22' in Fig 6, instead of at the end of the other limb of the L-shape, and portion 24 of guide 20 was vertical instead of inclined, the mechanism would operate in a similar way, but without any preliminary tilting effect. To put it another way, all that is needed in order to produce the supplemental tilting effect, in the above embodiment, is a chosen inclination of guide portion 24 and a corresponding chosen offset position for roller 22", and the corresponding related portion of support 12. All the remaining parts of the lifting and tilting mechanism remain unchanged with respect to a mechanism capable of normal action without supplemental tilt.

## Claims

1. An unloading mechanism (10) for boxes or the like produce containers comprising:
(a) a moveable support means (12) to receive a box (14) or the like produce container;
(b) said moveable support means (12) having roller members (22' 22");
(c) a pair of spaced upright parallel tracks (20) to receive the roller members (22' 22") of said moveable support (12)
(d) a mechanism (16) to lift and lower said support means (12) within said parallel tracks (20) ;
(e) a tipping or tilt mechanism (18) whereby said support means (12) and the box (14) mounted thereon can be tipped or tilted to facilitate unloading
characterised in that
(f) said parallel tracks (20) are formed with an angled lower portion (24) and said roller members (22',22") are in a positional relationship such that said lower portion (24) along which the support platform (12) travels as it is lifted causes a degree of tilt to be imparted to said support means (12) and the box (14) supported thereon as the box (14) is elevated to the required tipping position,
wherein said support means (12) and a box (14) mounted thereon are maintained in the caused degree of tilt tilted as the box (14) is lifted towards the tipping or tilt mechanism (18).

2. A mechanism according to claim 1 characterised in that said support means (12) has a base portion (21) on which the box (14)to be lifted is received and upright portion (23) which supports the box (14) when in the tilted attitude.

3. A mechanism according to claim 2 characterised in that said base portion (21) extends beyond said upright portion (23) such that a portion (25) of the base extends beyond the upright portion (23).

4. A mechanism according to claim 3 characterised in that said support means (12) is formed with two pairs of roller members (22' 22"), wherein one pair of roller members (22') are located on the upright portion (23) and the second pair of roller members (22") being located on the extended region (25) of the base portion (21).

5. A mechanism according to claim 4 characterised in that said prior to lifting, the pair of roller members (22') on the upright portion (21) of the base are located within the upright portion of the track (20) and the second pair of roller members (22") on the extending portion (25) of the base portion (23) are located within the angled portion (24) of the track.

6. A mechanism according to claim 5 characterised in that during lifting of the support means (12) the second pair of roller members (22") rotate and ride within the angled lower portion (24) of the track towards the upright region wherein the support (12) tilts in order to accommodate the geometry of the track members (20) to enable the support (12) to continue to ascend.

7. A mechanism according to claim 6 characterised in that the angled region (24) of the track (20)is between 5 and 25 degrees from the vertical.

8. A mechanism according to claim 1 characterised in that said track (20) is pivotally mounted to frame member (13)

9. A mechanism according to claim 1 characterised in that a lid (26) is provided for engaging a tilted box (14) in a clamped or closed relationship said lid (26) being held at an angled attitude in order to engage a tilted box (14).

10. A mechanism according to claim 9 characterised in that during tilting or tipping the tipping mechanism pivots the support means (12), the fixed lid (26), the box (14) retained therebetween and the tracks (20).

11. A method of unloading boxes or the like said method comprising the step of providing an unloading mechanism as defined by one of the claims 1 - 10, the step of causing said mechanism to impart a tilt to the box to be unloaded and the step of maintaining the box in a tilted attitude as it is being lifter prior to the step of completing the tilting thereof being performed by separate means so as to effect the emptying of the box.

## Patentansprüche

1. Entlademechanismus (10) für Kisten oder ähnliche Produktbehälter mit:
(a) einem bewegbaren Trägermittel (12) zum Aufnehmen einer Kiste (14) oder eines ähnlichen Produktbehälters,
(b) wobei das bewegbare Trägermittel (12) Rollenelemente (22', 22") hat,
(c) zwei beabstandeten, aufrechten, parallelen Schienen (20) zum Aufnehmen der Rollenelemente (22', 22") des bewegbaren Trägers (12),
(d) einem Mechanismus (16) zum Anheben und Absenken des Trägermittels (12) in den parallelen Schienen (20);
(e) einem Kipp- oder Neigemechanismus (18), durch den das Trägermittel (12) und die darauf befestigte Kiste (14) gekippt oder geneigt werden können, um das Entladen zu erleichtern,
dadurch **gekennzeichnet**, daß
(f) an den parallelen Schienen (20) ein gewinkelter unterer Abschnitt (24) ausgebildet ist und die Rollenelemente (22', 22") in einer derartigen Positionsbeziehung stehen, daß durch den unteren Abschnitt (24), entlang dem die Trägerbühne (12) sich beim Anheben bewegt, ein Neigungsgrad auf das Trägermittel (12) und die darauf gehaltene Kiste (14) übertragen wird, wenn die Kiste (14) in die geforderte Kippstellung angehoben wird,
wobei das Trägermittel (12) und eine darauf befestigte Kiste (14) in dem erzeugten Neigungsgrad gehalten werden, wenn die Kiste (14) auf den Kipp- oder Neigemechanismus (18) zu bewegt wird.

2. Mechanismus nach Anspruch 1, dadurch **gekennzeichnet**, daß das Trägermittel (12) einen Basisabschnitt (21), auf dem die anzuhebende Kiste (14) aufgenommen ist, und einen Pfostenabschnitt (23) hat, welcher die Kiste (14) in der gekippten Stellung stützt.

3. Mechanismus nach Anspruch 2, dadurch **gekennzeichnet**, daß der Basisabschnitt (21) über den Pfostenabschnitt (23) hinaus verläuft, so daß ein Teil (25) der Basis über den Pfostenabschnitt (23) hinausgeht.

4. Mechanismus nach Anspruch 3, dadurch **gekennzeichnet**, daß das Trägermittel (12) mit zwei Paaren von Rollenelementen (22', 22") ausgebildet ist, wobei ein Paar Rollenelemente (22') an dem Pfostenabschnitt (23) und das zweite Paar Rollenelemente (22") an dem verlängerten Bereich (25) des Basisabschnitts (21) angeordnet ist.

5. Mechanismus nach Anspruch 4, dadurch **gekennzeichnet**, daß vor dem Anheben das Paar Rollenelemente (22') an dem Pfostenabschnitt (23) der Basis in dem geraden Abschnitt der Schiene (20) und das zweite Paar Rollenelemente (22") an dem verlängerten Abschnitt (25) des Basisabschnitts (21) in dem gewinkelten Abschnitt (24) der Schiene angeordnet ist.

6. Mechanismus nach Anspruch 5, dadurch **gekennzeichnet**, daß sich das zweite Paar Rollenelemente (22") beim Anheben des Trägermittels (12) dreht und in dem gewinkelten unteren Abschnitt (24) der Schiene in Richtung des geraden Abschnitts läuft, wobei der Träger (12) kippt, um der Geometrie des Schienenelements (20) zu folgen und die weitere Aufwärtsbewegung des Trägers (12) zu ermöglichen.

7. Mechanismus nach Anspruch 6, dadurch **gekennzeichnet**, daß der gewinkelte Abschnitt (24) der Schiene (20) zwischen 5 und 25 Grad von der Vertikalen abweicht.

8. Mechanismus nach Anspruch 1, dadurch **gekennzeichnet**, daß die Schiene (20) schwenkbar an dem Rahmenelement (13) befestigt ist.

9. Mechanismus nach Anspruch 1, dadurch **gekennzeichnet**, daß ein Deckel (26) vorgesehen ist, der mit einer geneigten Kiste (14) in geklemmter oder geschlossener Beziehung in Eingriff kommt, wobei der Deckel (26) in einer gewinkelten Stellung gehalten wird, um mit einer geneigten Kiste (14) in Eingriff zu kommen.

10. Mechanismus nach Anspruch 9, dadurch **gekennzeichnet**, daß der Kippmechanismus das Trägermittel (12), den befestigten Deckel (26), die dazwischen gehaltene Kiste (14) sowie die Schienen (20) beim Neigen oder Kippen schwenkt.

11. Verfahren zum Entladen von Kisten oder dergleichen, mit den Schritten:
Bereitstellen eines wie in einem der Ansprüche 1 bis 10 beschriebenen Entlademechanismus,
Veranlassen des Mechanismus zum Übertragen einer Neigung auf die zu entladende Kiste, und
Halten der Kiste in einer gekippten Stellung beim Anheben vor dem vollständigen Kippen, welches durch separate Mittel ausgeführt wird, um das Entleeren der Kiste zu bewirken.

## Revendications

1. Mécanisme de déchargement (10) pour caisses ou conteneurs de produit analogues, comprenant :
(a) un moyen de support déplaçable (12) pour recevoir une caisse (14) ou le conteneur de produit analogue ;
(b) le dit moyen de support déplaçable (12) comportant des galets (22', 22") ;
(c) deux guidages parallèles espacés s'étendant vers le haut (20) pour recevoir les galets (22', 22") du dit moyen de support déplaçable (12) ;
(d) un mécanisme (16) pour faire monter et descendre le dit moyen de support (12) dans les dits guidages parallèles (20) ;
(e) un mécanisme de basculement ou d'inclinaison (18) par lequel le dit moyen de support (12) et la caisse (14) placée sur celui-ci peuvent être basculés ou inclinés pour faciliter le déchargement ;
caractérisé en ce que :
(f) les dits guidages parallèles (20) sont formés avec une partie inférieure inclinée (24) et les dits galets (22', 22") sont dans une relation de position telle que la dite partie inférieure (24), le long de laquelle le moyen de support (12) se déplace pendant sa montée, engendre un degré d'inclinaison du dit moyen de support (12) et de la caisse (14) supportée sur celui-ci lorsque la caisse (14) est élevée à la position de basculement requise ;et
le dit moyen de support (12) et une caisse (14) placée sur celui-ci sont maintenus dans le degré d'inclinaison engendré, pendant que la caisse (14) est levée vers le mécanisme de basculement ou d'inclinaison (18).

2. Mécanisme selon la revendication 1, caractérisé en ce que le dit moyen de support (12) comprend une partie de base (21) sur laquelle la caisse (14) à lever est reçue, et une partie montante (23) qui supporte la caisse (14) lorsqu'elle est dans l'attitude inclinée.

3. Mécanisme selon la revendication 2, caractérisé en ce que la dite partie de base (21) s'étend au-delà de la dite partie montante (23) de sorte qu'une partie (25) de la base s'étend au -delà de la partie montante (23).

4. Mécanisme selon la revendication 3, caractérisé en ce que le dit moyen de support (12) comporte deux paires de galets (22', 22"), une paire de galets (22') étant située sur la partie montante (23) et la deuxième paire de galets (22") étant située sur le prolongement (25) de la partie de base (21).

5. Mécanisme selon la revendication 4, caractérisé en ce que, avant le levage, la paire de galets (22') de la partie montante (23) de la base est située dans la partie verticale du guidage (20) et la deuxième paire de galets (22") du prolongement (25) de la partie de base (21) est située dans la partie inclinée (24) du guidage.

6. Mécanisme selon la revendication 5, caractérisé en ce que, pendant la montée du moyen de support (12), la deuxième paire de galets (22") est en rotation et se déplace dans la partie inférieure inclinée (24) du guidage, vers la région verticale, dans laquelle le moyen de support (12) s'incline afin de s'adapter à la géométrie des éléments de guidage (20) pour que le moyen de support (12) puisse continuer à monter.

7. Mécanisme selon la revendication 6, caractérisé en ce que la région inclinée (24) du guidage (20) est disposée suivant un angle compris entre 5 et 25 degrés par rapport à la verticale.

8. Mécanisme selon la revendication 1, caractérisé en ce que le dit guidage (20) est monté de façon pivotante sur un élément d'ossature (13).

9. Mécanisme selon la revendication 1, caractérisé en ce qu'un couvercle (26) est prévu pour venir en contact avec une caisse inclinée (14) dans une relation de blocage ou de fermeture, le dit couvercle (26) étant maintenu à une attitude inclinée afin de venir en prise avec une caisse inclinée (14).

10. Mécanisme selon la revendication 9, caractérisé en ce que, pendant l'inclinaison ou le basculement, le mécanisme de basculement fait pivoter le moyen de support (12), le couvercle fixe (26), la caisse (14) retenue entre le moyen de support et le couvercle, et les guidages (20).

11. Procédé de déchargement de caisses ou analogues, le dit procédé comprenant l'étape de réalisation d'un mécanisme de déchargement selon une des revendications 1 à 10, l'étape de commande du dit mécanisme pour communiquer une inclinaison à la caisse à décharger, et l'étape de maintien de la caisse dans une attitude inclinée pendant son levage, avant l'étape d'achèvement de l'exécution de son basculement par des moyens séparés afin d'effectuer la vidange de la caisse.
